# EUROPÄISCHE PATENTSCHRIFT

(11) **EP 1 809 499 B1**
(45) Veröffentlichungstag und Bekanntmachung des Hinweises auf die Patenterteilung: **09.04.2008**
(21) Anmeldenummer: 05802574.3
(22) Anmeldetag: 02.11.2005
(51) Int. Cl.: B60H 1/32

(54) **PKW-KLIMAANLAGEN MIT ADSORPTIONSWÄRMEPUMPEN**
PASSENGER CAR AIR-CONDITIONING SYSTEMS WITH ADSORPTION HEAT PUMPS
INSTALLATIONS DE CLIMATISATION DE VOITURE PARTICULIERE COMPORTANT DES POMPES A CHALEUR D'ADSORPTION

(30) Priorität: 05.11.2004 DE 102004053436
(43) Veröffentlichungstag der Anmeldung: 25.07.2007
(73) Patentinhaber: Fraunhofer-Gesellschaft zur Förderung der angewandten Forschung e.V., 80686 München (DE); SorTech AG, 06120 Halle (DE)
(72) Erfinder: HENNING, Hans-Martin, 79100 Freiburg (DE); MITTELBACH, Walter, 06108 Halle (DE)
(86) Internationale Anmeldenummer: PCT/EP2005/011699
(87) Internationale Veröffentlichungsnummer: WO 2006/048244

(56) Entgegenhaltungen:
- EP-A- 0 840 077
- US-A- 4 408 468
- US-A- 4 548 046
- US-A- 5 024 064

## Beschreibung

Die Erfindung betrifft Klimaanlagen für Kraftfahrzeuge mit Adsorptionswärmepumpen.

Klimaanlagen für Kraftfahrzeuge werden heute durch motorische mittels Keilriemen angetriebene Kompressionskältemaschinen ausgeführt. In der Regel dient R134a als Kältemittel. Nachteilig daran ist, das R134a und andere HFKW ein hohes Treibhauspotenzial besitzen. Aufgrund der hohen Leckraten in Kraftfahrzeugklimaanlagen wird der Einsatz weniger bedenklicher Kältemittel, wie etwa CO₂ entwickelt. Der nicht unbeträchtliche zusätzliche Kraftstoffverbrauch von etwa 11/100km/h lässt sich dadurch jedoch nicht reduzieren. Kompressionskältemaschinen können in der Regel auch nicht bei ausgeschaltetem Antriebsmotor des Kraftfahrzeugs betrieben werden. Dies führt zu unkomfortabel hohen Standtemperaturen. Die hohen Standtemperaturen bedingen auch eine leistungsfähige Auslegung der Kompressionskältemaschinen, um nach dem Starten des Antriebsmotors in vertretbar kurzer Zeit angenehme Temperaturen im Fahrzeuginnenraum zu erreichen.

Wegen der vorgenannten Nachteile gibt es verschiedene Bemühungen, zur Klimatisierung von Kraftfahrzeugen thermisch angetriebene Wärmepumpen, insbesondere Adsorptionswärmepumpen, einzusetzen. Diese konnten sich jedoch bisher am Markt nicht durchsetzen, weil sie räumlich zuviel Platz beanspruchen.

Aus der US 4 408 468 ist eine Adsorptionswärmepumpe bekannt, die als basis für den Oberbegriff des Anspruchs 1 gilt.

Aufgabe der vorliegenden Erfindung ist es daher, eine Adsorptionswärmepumpe bereitzustellen, welche eine kompakte Bauart aufweist und geeignet für den Betrieb in Kraftfahrzeugen ist. Die Erfindung hat ferner die Aufgabe ein Verfahren zur kontinuierlichen Klimatisierung mit Adsorptionswärmepumpen bereitzustellen. Außerdem sind geeignete Verwendungen von Adsorptionswärmepumpen in der Fahrzeugklimatechnik anzugeben.

Die Aufgaben werden durch die unabhängigen Ansprüche gelöst. Vorteilhafte Weiterbildungen finden sich in den Unteransprüchen.

Erfindungsgemäß wurde erkannt, dass eine Adsorptionswärmepumpe zur Klimatisierung eines Kraftfahrzeugs mit zwei Adsorberkammern, die jeweils mit einem Kondensator und einem Verdampfer verbunden sind, dann besonders kompakt und robust ausgeführt werden kann, wenn Trägermaterial mit dem Sorptionsmittel beschichtet wird. Mit Beschichtung geeigneter Trägermaterialien lassen sich große Flächen, die für die Adsorption und Desorption zur Verfügung stehen, auf kleinem Raum schaffen. Vor allem wird durch Beschichtung eine wesentlich bessere Wärmezu- und -abfuhr zum Sorptionsmaterial erreicht, da die Wärmeleitung zwischen Trägermaterial und Sorptionsmittel wesentlich verbessert ist. Das Trägermaterial, in der Regel Metall mit guten Wärmeleitungseigenschaften, kann mit einem Wärmetauscher gut gekühlt und beheizt werden. Das Trägermaterial kann beispielsweise eine Anordnung mehrerer Aluminiumplatten sein, die durch Kühlwasser gekühlt werden. Bei konventionellen Adsorptionswärmepumpen liegt das Sorptionsmittel als Schüttung vor. Dabei ist die Wärmeleitung zu einem möglichen Wärmetauscher schlecht.

Die Adsorberkammern, der Kondensator und der Verdampfer sind zudem mit einer nicht freitragenden Vakuumhülle umgeben. Damit ist eine platzsparende und vor allem gewichtssparende Ausführung der Vakuumhülle möglich. Eine gewichtssparende Ausführung ist im Kraftfahrzeug wichtig, um Kraftstoff zu sparen und bei gleicher Motorisierung eine bessere Beschleunigung zu erhalten. Eine freitragende Vakuumhülle kann deshalb verwendet werden, weil die Vakuumhülle von den Einbauten getragen wird.

Eine weitere Möglichkeit eine Adsorptionswärmepumpe besonders platzsparend auszuführen ergibt sich, wenn der Verdampfer und der Kondensator zwischen den beiden Adsorberkammern angeordnet ist. Um das bei der Desorption freiwerdende Arbeitsmittel, das im Kondensator kondensiert, an den Verdampfer zurückzuführen, befindet sich zwischen dem Kondensator und dem Verdampfer eine Kondensatrückführung. Um den höheren Druck im Kondensator und niedrigeren Druck im Verdampfer aufrechtzuerhalten ist in der Kondensatrückführung ein druckreduzierendes Verbindungselement, in der Regel als Drosselventil ausgeführt, vorgesehen. Für die zwischen den Adsorberkammern und dem Verdampfer und Kondensator vorgesehenen Verbindungselemente können Ventile vorgesehen werden.

Die vorgenannte Bauform eignet sich besonders auch für Adsorptionswärmepumpen, bei denen Trägermaterial mit Sorptionsmittel beschichtet ist und eine freitragende Vakuumhülle vorgesehen ist.

Bevorzugt werden thermohydraulische Ventile als Verbindungselemente zwischen Adsorberkammern und Kondensator bzw. Verdampfer eingesetzt. Damit kann erreicht werden, dass in einer zur Desorption erhitzten Adsorberkammer das Ventil zum Kondensator durch die hohe Temperatur geöffnet wird und das Ventil zum Verdampfer geschlossen wird. Ebenso ist es möglich, dass durch Kühlung während der Adsorption, das Ventil zum Verdampfer öffnet und das Ventil zum Kondensator schließt.

Eine energiesparende Betriebsweise der Adsorptionswärmepumpe kann erreicht werden, wenn ein Wärmetauscher vorgesehen ist, in welchem vom Antriebsmotor gewinnbare Wärme dem zu desorbierenden Sorptionsmaterial zugeführt werden kann. Bereits nach kurzer Betriebszeit des Antriebsmotors steht genügend Abwärme zur Verfügung, um das Sorptionsmaterial zu desorbieren. Die im Antriebsmotor anfallende Wärme kann über den Kühler und/oder über einen Wärmetauscher dem Abgas entnommen werden. Um einen Betrieb der Adsorptionswärmepumpe unabhängig vom Betrieb des Antriebsmotors zu ermöglichen ist alternativ oder zusätzlich vorgesehen, die notwendige Wärme durch die Standheizung bereitzustellen.

Um eine kompakte und gewichtssparende Bauweise zu ermöglichen, ist der Wärmetauscher, mit dem bei der Desorption Wärme zugeführt wird, so ausgelegt, dass die bei der Adsorption anfallende Wärme abgeführt werden kann. Dazu kann am Wärmetauscher ein Ventil angebracht sein, das es gestattet ein Sekundärmedium entweder zum Kühler des Antriebsmotors oder zu einem externen Kühler zur Abfuhr der bei der Adsorption freiwerdenden Wärme fließen zu lassen.

Die im Verdampfer erzeugbare Kälte kann durch ein Wärmeübertragungsmedium und/oder ein Wärmerohr an einen Luftkühler übertragen werden. In diesem Luftkühler kann die in einen zu kühlenden Bereich gepumpte Luft gekühlt werden. Im Allgemeinen gilt es die Fahrgastzelle zu kühlen. Denkbar ist aber auch die Kühlung des Laderaums eines LKWs, der verderbliche Waren transportiert. Die Übertragung der Kälte durch ein Wärmeübertragungsmedium oder ein Wärmerohr hat den Vorteil, dass der Verdampfer kleiner ausgeführt werden kann, da eine relativ kleine Fläche benötigt wird, um die Kälte vom Verdampfer an ein flüssiges Wärmeübertragungsmedium oder an ein Wärmerohr zu übertragen.

Es ist aber auch möglich die zu kühlende Luft direkt am Verdampfer zu kühlen. Dies hat den Vorteil, dass der Verdampfer eine höhere Temperatur als in der vorstehenden Alternative haben darf, um eine hinreichend kühle Luft zu erhalten. Bei einer höheren Temperatur im Verdampfer kann aus thermodynamischen Gründen eine höhere Effizienz der Adsorptionswärmepumpe erreicht werden.

Eine kompakte Bauform des Kondensators wird auch erzielt, wenn die in den Adsorberkammern und/oder im Kondensator anfallende Wärme durch ein flüssiges Wärmeübertragungsmedium und/oder ein Wärmerohr an einen Rückkühler übertragbar ist, in dem die Wärme an die Außenluft übertragbar ist. Dabei ist es auch eine Integration in das Kühlsystem des Antriebsmotors denkbar.

Ermöglicht man, dass die in den Adsorberkammern und/oder im Kondensator anfallende Wärme direkt an die Außenluft übertragen wird, kann der Temperaturunterschied zwischen der Außentemperatur und der Kondensatortemperatur niedriger sein, da die für die Überragung der Wärme an einen Zwischenkühlkreis erforderliche Temperaturdifferenz wegfällt. Dies gestattet insbesondere bei hohen Temperaturen der Außenluft einen effizienteren Betrieb der Adsorptionswärmepumpe.

Geeignete Sorptionsmaterialien für eine Adsorptionswärmepumpe zur Klimatisierung von Kraftfahrzeugen sind Zeolithe. Auch andere Gerüstsilikate und amorphe offenporige Silikate, beispielsweise Silikagel, oder aktivierte Kohlenstoffe sind geeignet. Grundsätzlich kommen alle aus der Adsorptionswärmepumpentechnik bekannten Sorptionsmittel in Frage.

Als Arbeitsmittel eignet sich Wasser, da es bei günstigen thermodynamischen Eigenschaften zugleich billig und günstig ist. Auch Methanol oder Metahnol-Wasser Gemische sind geeignet. Grundsätzlich können alle bekannten Arbeitsmittel verwendet werden.

Eine deutliche Erhöhung des Komforts kann erreicht werden, wenn eine Steuerung der Adsorptionswärmepumpe vorhanden ist, die eine Klimatisierung zu einer vorgegebenen Zeit und/oder nach Empfang eines außerhalb des Fahrzeugs auslösbaren Signals ermöglicht. Die Fahrgastzelle eines Kraftfahrzeugs heizt sich im Stand bei entsprechendem Wetter mitunter erheblich auf. Selbst leistungsstarke Klimaanlagen benötigen längere Zeit, um in der Fahrgastzelle angenehme Temperaturen bereitzustellen. Die nötige leistungsstarke Auslegung der Klimaanlagen führt zu einem erhöhten Platzbedarf, zu einem erhöhten Gewicht und zu einem erhöhten Energieverbrauch beim Betrieb. Dies kann vermieden werden, wenn die Klimatisierung zu einer vorgegebenen Zeit vor dem geplanten Fahrtbeginn startet. Da der erneute Fahrtbeginn häufig bei Verlassen des Fahrzeugs nicht feststeht, ist es günstig wenn die Klimatisierung durch ein außerhalb des Fahrzeugs auslösbares Signal vom Benutzer ausgelöst werden kann. Dies kann beispielsweise mit Funkgeräten, Mobiltelefonen oder anderen Geräten zur schnurlosen Signalübertragung erfolgen. Der Betrieb der Klimaanlage im Stand ist bei Kompressionskältemaschinen, wie sie üblicherweise zur Fahrzeugklimatisierung eingesetzt werden, nicht möglich. Adsorptionswärmepumpen hingegen können beispielsweise mit einer Standheizung betrieben werden

Eine weitere Möglichkeit für eine kompakte Bauweise einer Adsorptionswärmepumpe wird dadurch erreicht, dass zur Wärmeübertragung vom Sorptionsmaterial an ein in einem Wärmetauscher fließendes Sekundärmedium ein Metallschwamm vorgesehen ist. Der Metallschwamm kann als Trägermedium für das Sorptionsmittel dienen. Damit weisen die Adsorberkammern freie Formbarkeit auf. Sie können flexibel gestaltet werden und freien Platz im Motorraum oder anderen Bereichen des Kraftfahrzeugs nutzen Eine Wärmepumpe mit einem Metallschwamm zur Wärmeübertragung und/oder als Trägermaterial für das Sorptionsmittel liefert generell bei allen Adsorptionswärmepumpen die genannten Vorteile. Es sind daher bei allen Adsorptionswärmepumpen grundsätzlich die nachfolgend beschriebenen Ausbildungen der Adsorptionswärmepumpe möglich.

So ist es möglich die Adsorberkammern so anzuordnen, dass der Metallschwamm bei einem Unfall zur Aufnahme kinetischer Energie dienen kann. Damit dient die Adsorptionswärmepumpe zugleich als Sicherheitseinrichtung. Dies erhöht bei selbem Gewicht die Sicherheit oder gestattet gleiche Sicherheit bei eingespartem Gewicht.

Besonders günstig ist es hierzu die Adsorptionswärmepumpe als Stoßstange des Kraftfahrzeugs auszubilden. Damit kann die Adsorptionswärmepumpe platz- und gewichtssparend untergebracht werden. Außerdem kann die Kühlung durch Außenluft einfach erfolgen.

Um eine quasikontinuierliche Klimatisierung eines Kraftfahrzeugs im Dauerbetrieb erreichen zu können, ist eine Adsorptionswärmepumpe mit einer ersten Adsorberkammer und einer zweiten Adsorberkammer so zu betreiben, dass abwechselnd die erste Adsorberkammer adsorbiert bzw. desorbiert wird und gleichzeitig die zweite Adsorberkammer desorbiert bzw. adsorbiert wird. Diese Verfahrensweise gestattet auf einfache Weise eine quasikontinuierliche Klimatisierung. Für die Adsorption einer Adsorberkammer besteht eine offene Verbindung zwischen der betreffenden Adsorberkammer und dem Verdampfer und keine offene Verbindung zwischen der betreffenden Adsorberkammer und dem Kondensator. Für die Desorption hingegen besteht eine offene Verbindung der betreffenden Adsorberkammer zum Kondensator und keine offene Verbindung zum Verdampfer.

Eine Weiterbildung des Verfahrens besteht darin, dass nach Abstellen des Antriebsmotors des Kraftfahrzeugs die Adsorberkammern ohne gleichzeitige Adsorption desorbiert werden. Nach Abstellen des Antriebsmotors entfällt in der Regel die Notwendigkeit das Kraftfahrzeug zu klimatisieren. Allerdings heizt sich die Fahrgastzelle häufig stark auf, sodass abzusehen ist, dass eine Klimatisierung nötig sein wird, ohne dass die für die Desorption notwendige Wärme aus der Abwärme des Antriebsmotors gewonnen werden kann. Daher ist es günstig nach dem Abstellen des Antriebsmotors noch vorhandene Abwärme dafür zu nutzen die Adsorberkammern zu desorbieren, auch wenn momentan keine Adsorption erfolgt.

Eine Adsorptionswärmepumpe kann als Kälte- und/oder Wärmespeicher genutzt werden, indem das Sorptionsmaterial in einem desorbierten Zustand gehalten wird. Die Verwendung als Kältespeicher erfolgt, indem die Möglichkeit genutzt wird, im Verdampfer Kälte zu erzeugen durch Adsorption des Sorptionsmaterials. Bei der Verwendung als·Wärmespeicher wird der Umstand genutzt, dass bei der Adsorption Wärme frei wird. Diese Wärme kann beispielsweise zur Vorwärmung des Antriebsmotors genutzt werden. Dadurch können Kraftstoffverbrauch und Verschleiß gesenkt werden. Auch eine Heizung der Fahrgastzelle ist so energiesparend möglich

Anhand der Figuren sollen Einzelheiten nachfolgend näher beschrieben werden. Dabei zeigen
Fig. 1 eine Grundbauform der erfindungsgemäßen Adsorptionswärmepumpe
Fig. 2a eine Aufsicht und Fig. 2b eine Seitenansicht einer als Stoßstange ausgebildeten Adsorptionswärmepumpe
Fig. 3a und 3b eine Einbindung der Adsorptionswärmepumpe in die Klimaanlage eines Fahrzeugs mit getrennten Wärmeübertragern
Fig. 4a und 4b Ausführungsformen mit integrierter Rückkühlung
Fig. 5a und 5b zeigen Ausführungsformen mit direkter Beheizung des Verdampfers durch die Umluft

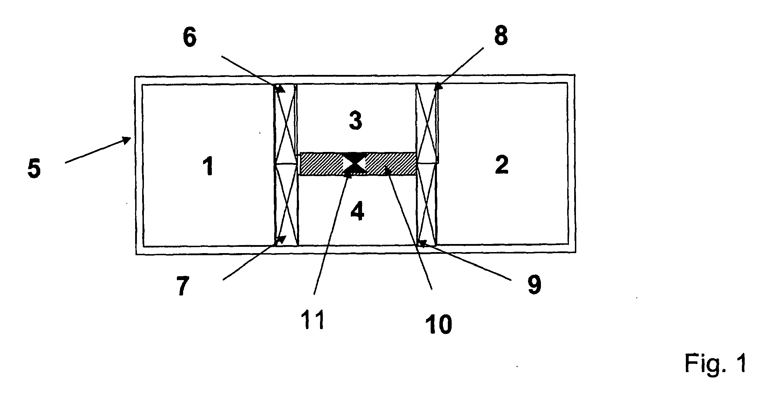

In Fig. 1 ist die Grundbauform der erfindungsgemäßen Adsorptionswärmepumpe ersichtlich. Die erste Adsorberkammer 1, die zweite Adsoberkammer 2, der Kondensator 3 und der Verdampfer 4 sind von einer nicht freitragenden Vakuumhülle 5 umgeben. Die Adsorberkammern 1, 2 sind mit Ventilen 6, 7, 8, 9 jeweils mit dem Kondensator 3 und dem Verdampfer 4 verbunden. Kondensator 3 und Verdampfer 4 sind zwischen den Adsorberkammern angeordnet. Kondensator 3 und Verdampfer 4 sind durch eine Kondensatrückführung 10, die ein Drosselventil 11 aufweist, verbunden.

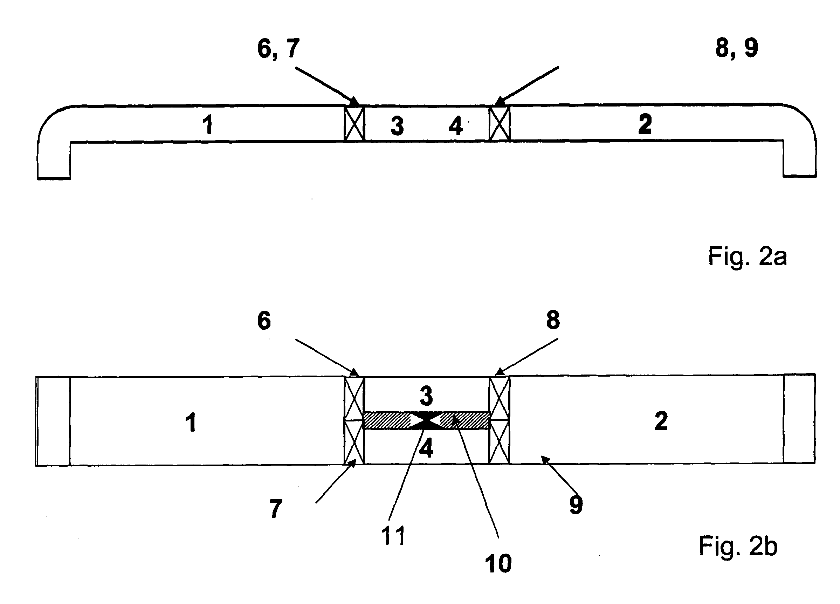

In Fig. 2a ist eine Aufsicht einer Adsorptionswärmepumpe gezeigt, die als Stoßstange ausgebildet ist. In den Adsorberkammern sind Metallschwämme als Wärmeübertrager eingesetzt. Dies ermöglicht die dargestellte Ausbildung der Adsorptionswärmepumpe als Stoßstange. In Fig. 2b ist eine Seitenansicht der als Stoßstange ausgebildeten Adsorptionswärmepumpe gezeigt.

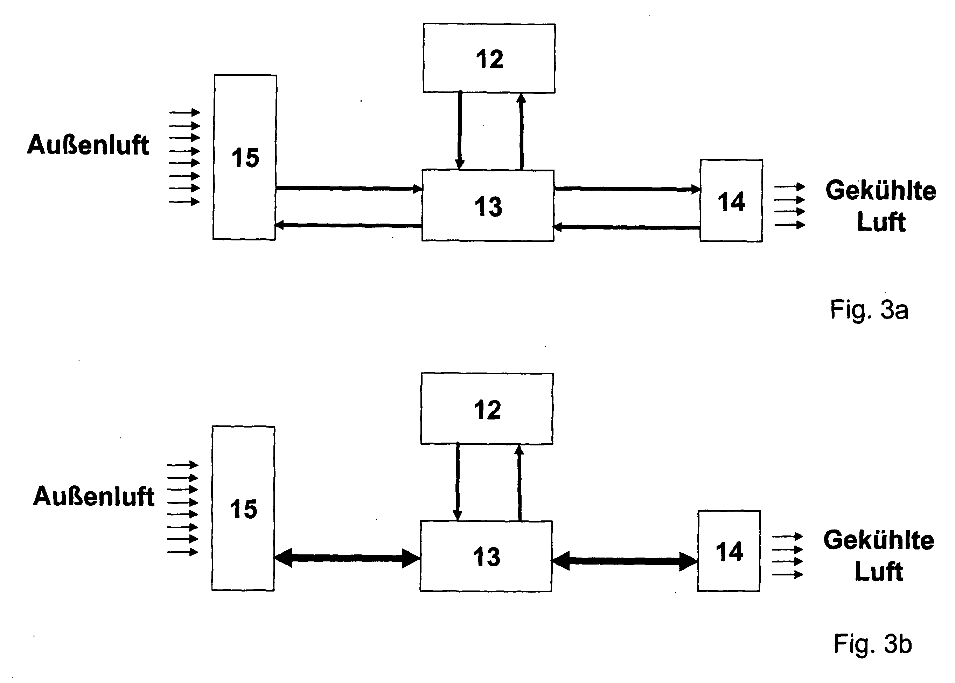

Fig. 3a zeigt die Einbindung der Adsorptionswärmepumpe in das Klimasystem des Fahrzeugs. Die vom Antriebsmotor 12 stammende Abwärme wird der Adsorptionswärmepumpe 13 zugeführt. Als Wärmeübertragungsmedium dient ein Wasser-Glykol-Gemisch. Damit wird die für die Desorption erforderliche Wärme zugeführt. Die Wärme muss für eine Adsorptionswärmepumpe mit dem Sorptionsmittel Zeolith und dem Arbeitsmittel Wasser bei einer Temperatur von mindestens 70°C zugeführt werden.

Die im Verdampfer 4 der Adsorptionswärmepumpe 13 erzeugte Kälte wird mit einem Wasser-Glykol-Gemisch in den Luftkühler 14 transportiert. Im Luftkühler 14 wird die Kälte über einen Wärmetauscher an die zu kühlende Luft übertragen. Die gekühlte Luft wird in die Fahrgastzelle gepumpt. Die bei der Adsorption und bei der Kondensation freiwerdende Wärme wird mit einem Wasser-Glykol-Gemisch zum Rückkühler 15 transportiert

Fig. 3b zeigt eine Ausführungsform, in der der Wärmetransport zwischen Adsorptionswärmepumpe und Rückkühler sowie Luftkühler jeweils über ein Wärmerohr erfolgt.

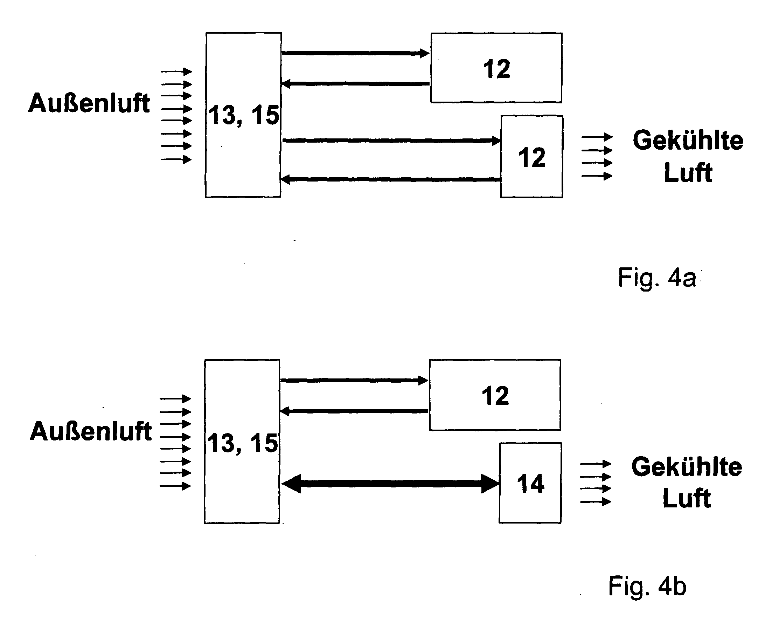

Fig. 4a zeigt einen Aufbau ohne externen Rückkühler. In diesem Fall wird die in der Adsorptionswärmepumpe 13 anfallende Wärme direkt an die Außenluft übertragen. Fig. 4b zeigt eine Variante, bei der die Übertragung der Kälte von der Adsorptionswärmepumpe 13 an den Luftkühler 14 durch ein Wärmerohr erfolgt. Die für die Desorption erforderliche Wärme wird vom Antriebsmotor 12 mit einem Wasser-Glykol-Gemisch an die Adsorptionswärmepumpe 13 übertragen.

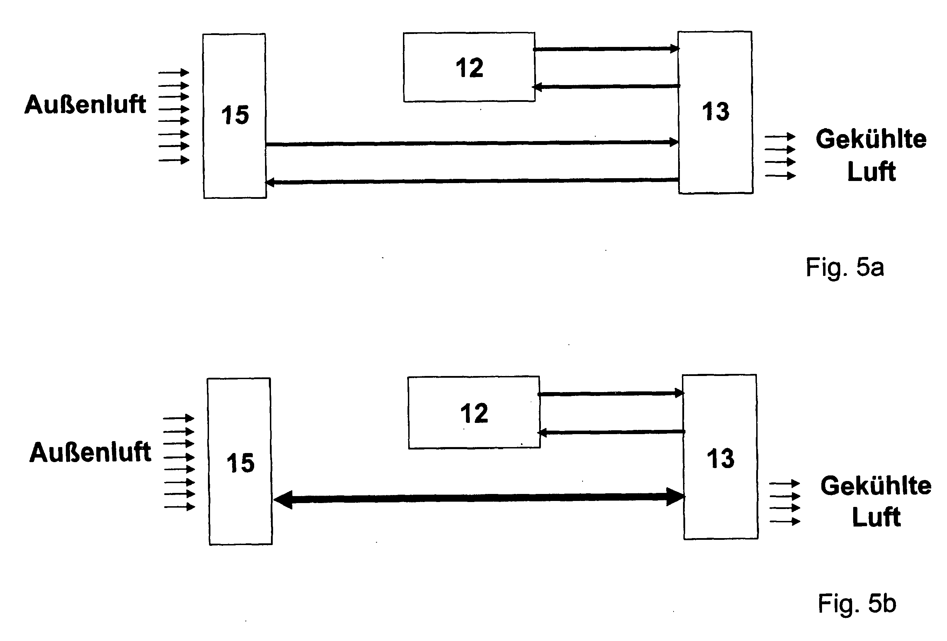

Fig. 5a zeigt eine Ausführungsform, bei der die im Verdampfer 4 erzeugte Kälte direkt an die Luft übertragen wird. die in die Fahrgastzelle gepumpt wird. Die bei der Adsorption und im Kondensator freiwerdende Wärme wird mit einem Wasser-Glykol-Gemisch an den Rückkühler 15 abgegeben. Alternativ kann wie in Fig. 5b gezeigt, die Wärme auch mit einem Wärmerohr dem Rückkühler 15 übertragen werden. Die für die Desorption erforderliche Wärme wird vom Antriebsmotor 12 mit einem Wasser-Glykol-Gemisch an die Adsorptionswärmepumpe 13 übertragen.

### Bezugszeichenliste

- 1: erste Adsorberkammer
- 2: zweite Adsorberkammer
- 3: Kondensator
- 4: Verdampfer
- 5: Vakuumhülle
- 6: Ventil zwischen erster Adsorberkammer und Kondensator
- 7: Ventil zwischen erster Adsorberkammer und Verdampfer
- 8: Ventil zwischen zweiter Adsorberkammer und Kondensator
- 9: Ventil zwischen zweiter Adsorberkammer und Verdampfer
- 10: Kondensatrückführung
- 11: Drosselventil
- 12: Antriebsmotor
- 13: Adsorptionswärmepumpe
- 14: Luftkühler
- 15: Rückkühler

## Patentansprüche

1. Adsorptionswärmepumpe zur Klimatisierung eines Kraftfahrzeugs mit einer ersten Adsorberkammer (1), die über ein erstes Verbindungselement (6) mit einem Kondensator (3) verbunden ist und über ein zweites Verbindungselement (7) mit einem Verdampfer (4) verbunden ist, einer zweiten Adsorberkammer (2), die über ein drittes Verbindungselement (8) mit dem Kondensator (3) verbunden ist und über ein viertes Verbindungselement (9) mit dem Verdampfer (4) verbunden ist, **dadurch gekennzeichnet, dass** die Adsorberkammern (1, 2), der Kondensator (3) und der Verdampfer (4) von einer nicht freitragenden Vakuumhülle (5) umgeben sind, wobei die Adsorberkammern Adsorber enthalten, die ein Trägermaterial, das mit einem Sorptionsmittel beschichtet ist, umfassen.

2. Adsorptionswärmepumpe insbesondere Adsorptionswärmepumpe nach Anspruch 1, mit einer ersten Adsorberkammer (1), die über ein erstes Verbindungselement (6) mit einem Kondensator (3) verbunden ist und über ein zweites Verbindungselement (7) mit einem Verdampfer (4) verbunden ist, einer zweiten Adsorberkammer (2), die über ein drittes Verbindungselement (8) mit dem Kondensator (3) verbunden ist und über ein viertes Verbindungselement (9) mit dem Verdampfer (4) verbunden ist **dadurch gekennzeichnet, dass** die Adsorberkammern (1, 2), der Kondensator (3) und der Verdampfer (4) von einer nicht freitragenden Vakuumhülle (5) umgeben sind, wobei der Verdampfer (4) und der Kondensator (3) zwischen der ersten Adsorberkammer (1) und der zweiten Adsorberkammer (2) angeordnet sind, und durch eine Kondensatrückführung (10) mit einem druckreduzierendem Verbindungselement (11) verbunden sind.

3. Adsorptionswärmepumpe nach einem der vorhergehenden Ansprüche, **dadurch gekennzeichnet, dass** als Verbindungselemente (6, 7, 8, 9) zwischen den Adsorberkammern (1, 2) und dem Kondensator (3) sowie dem Verdampfer (4) thermohydraulische Ventile eingesetzt sind.

4. Adsorptionswärmepumpe nach einem der vorhergehenden Ansprüche, **dadurch gekennzeichnet, dass** in den Adsorberkammern (1, 2) ein Wärmetauscher vorgesehen ist, in welchem vom Antriebsmotor (12) und/oder von einer Standheizung gewinnbare Wärme dem zu desorbierenden Sorptionsmaterial zuführbar ist.

5. Adsorptionswärmepumpe nach einem der vorhergenden Ansprüche, **dadurch gekennzeichnet, dass** der Wärmetauscher geeignet ist, die bei der Adsorption freiwerdende Wärme abzuführen.

6. Adsorptionswärmepumpe nach einem der vorhergehenden Ansprüche, **dadurch gekennzeichnet, dass** die im Verdampfer (4) erzeugbare Kälte durch ein Wärmeübetragungsgmedium und/oder ein Wärmerohr an einen Luftkühler (14) übertragbar ist, in dem die in einen zu kühlenden Bereich zu transportierende Luft kühlbar ist.

7. Adsorptionswärmepumpe nach einem der Ansprüche 1 bis 5, **dadurch gekennzeichnet, dass** die im Verdampfer (4) erzeugbare Kälte direkt an die in den zu kühlenden Bereich zu transportierende Luft übertragbar ist.

8. Adsorptionswärmepumpe nach einem der Ansprüche 1 bis 7, **dadurch gekennzeichnet, dass** die in den Adsorberkammern (1, 2) und/oder im Kondensator (3) anfallende Wärme durch ein Wärmeübetragunsgmedium und/oder ein Wärmerohr an einen Rückkühler (15) übertragbar ist, in dem die Wärme an die Außenluft abgegeben werden kann.

9. Adsorptionswärmepumpe nach einem der Ansprüche 1 bis 7, **dadurch gekennzeichnet, dass** die in den Adsorberkammern (1, 2) und/oder im Kondensator (3) anfallende Wärme direkt an die Außenluft abgegeben werden kann.

10. Adsorptionswärmepumpe nach einem der vorhergehenden Ansprüche, **dadurch gekennzeichnet, dass** das Sorptionsmaterial ein Zeolith ist.

11. Adsorptionswärmepumpe nach einem der vorhergehenden Ansprüche, **dadurch gekennzeichnet, dass** das Arbeitsmittel Wasser ist.

12. Adsorptionswärmepumpe nach einem der vorhergehenden Ansprüche, **dadurch gekennzeichnet, dass** eine Steuerung der Adsorptionswärmepumpe vorhanden ist, die eine Klimatisierung zu einer vorgegebenen Zeit und/oder nach Empfang eines außerhalb des Fahrzeugs auslösbaren Signals ermöglicht.

13. Adsorptionswärmepumpe, insbesondere nach einem der vorhergehenden Ansprüche, **dadurch gekennzeichnet, dass** zur Wärmeübertragung vom Sorptionsmaterial an ein in einem Wärmetauscher fließendes Sekundärmedium ein Metallschwamm vorgesehen ist.

14. Adsorptionswärmepumpe nach Anspruch 13, **dadurch gekennzeichnet, dass** die Adsorberkammern (1, 2) in einem Kraftfahrzeug so angeordnet sind, dass der Metallschwamm bei einem Unfall zur Aufnahme kinetischer Energie dienen kann

15. Adsorptionswärmepumpe nach einem der vorhergehenden Ansprüche, **dadurch gekennzeichnet, dass** die Adsorptionswärmepumpe als Stoßstange des Kraftfahrzeugs ausgebildet ist oder in einem Teilbereich der Stoßstange angeordnet ist.

16. Verfahren zur Klimatisierung eines Kraftfahrzeugs mit einer Adsorptionswärmepumpe nach einem der Ansprüche 1 bis 15, indem abwechselnd die erste Adsorberkammer (1) adsorbiert bzw. desorbiert und gleichzeitig die zweite Adsorberkammer (2) bei Adsorption der ersten Adsorberkammer (1)desorbiert bzw. bei Desorption der ersten Adsorberkammer (1) adsorbiert wird.

17. Verfahren nach Anspruch 16, **dadurch gekennzeichnet, dass** nach Abstellen des Antriebsmotors (12) des Kraftfahrzeugs mindestens eine Adsorberkammer (1, 2) ohne gleichzeitige Adsorption desorbiert wird.

18. Verwendung einer Adsorptionswärmepumpe, insbesondere einer Adsorptionswärmepunpe nach einem der Ansprüche 1 bis 15, als Kältespeicher und/oder als Wärmespeicher, indem das Sorptionsmaterial in einem desorbierten Zustand gehalten wird.

19. Verwendung einer Adsorptionswärmepumpe, insbesondere einer Adsorptionswärmepumpe nach einem der Ansprüche 1 bis 15, indem die bei der Adsorption freiwerdende Wärme zur Motorvorwärmung genutzt wird.

## Claims

1. An adsorption heat pump for air conditioning a motor vehicle having a first adsorber chamber (1), which is connected via a first connection element (6) to a condenser (3) and via a second connection element (7) to an evaporator (4), a second adsorber chamber (2), which is connected via a third connection element (8) to the condenser (3) and via a fourth connection element (9) to the evaporator (4), **characterized in that** the adsorber chambers (1, 2), the condenser (3), and the evaporator (4) are enclosed by a vacuum envelope (5), which is not self-supporting, the adsorber chambers containing adsorbers which comprise a carrier material that is coated by a sorbent.

2. An adsorption heat pump according to Claim 1, having a first adsorber chamber (1), which is connected via a first connection element (6) to a condenser (3) and via a second connection element (7) to an evaporator (4), a second adsorber chamber (2), which is connected via a third connection element (8) to the condenser (3) and via a fourth connection element (9) to the evaporator (4), **characterized in that** the adsorber chambers (1, 2), the condenser (3), and the evaporator (4) are enclosed by a vacuum envelope (5), which is not self-supporting, the evaporator (4) and the condenser (3) being situated between the first adsorber chamber (1) and the second adsorber chamber (2), and being connected by a condensate recirculation line (10) having a pressure-reducing connection element (11).

3. The adsorption heat pump according to one of the preceding claims, **characterized in that** thermohydraulic valves are used as the connection elements (6, 7, 8, 9) between the adsorber chambers (1, 2) and the condenser (3) and the evaporator (4).

4. The adsorption heat pump according to one of the preceding claims, **characterized in that** a heat exchanger is provided in the adsorber chambers (1, 2), in which heat, which may be obtained from the drive engine (12) and/or from an auxiliary heater, may be supplied to the sorbent to be desorbed.

5. The adsorption heat pump according to one of the preceding claims, **characterized in that** the heat exchanger is capable of dissipating the heat released during the adsorption.

6. The adsorption heat pump according to one of the preceding claims, **characterized in that** the cold which may be generated in the evaporator (4) may be transferred by a heat transfer medium and/or a heat pipe to an air cooler (14), in which the air to be transported into an area to be cooled may be cooled.

7. The adsorption heat pump according to one of Claims 1 through 5, **characterized in that** the cold which may be generated in the evaporator (4) may be transferred directly to the air to be transported into the area to be cooled.

8. The adsorption heat pump according to one of Claims 1 through 7, **characterized in that** the heat arising in the adsorber chambers (1, 2) and/or in the condenser (3) may be transferred by a heat transfer medium and/or a heat pipe to a recooling unit (15), in which the heat may be dissipated to the outside air.

9. The adsorption heat pump according to one of Claims 1 through 7, **characterized in that** the heat arising in the adsorber chambers (1, 2) and/or the condenser (3) may be dissipated directly to the outside air.

10. The adsorption heat pump according to one of the preceding claims, **characterized in that** the sorbent is a zeolite.

11. The adsorption heat pump according to one of the preceding claims, **characterized in that** the working agent is water.

12. The adsorption heat pump according to one of the preceding claims, **characterized in that** a controller of the adsorption heat pump is provided which allows air conditioning at a predefined time and/or after receiving a signal which may be triggered outside the vehicle.

13. An adsorption heat pump, particularly according to one of the preceding claims, **characterized in that** a metal sponge is provided for the heat transfer from the sorbent to a secondary medium flowing in a heat exchanger.

14. The adsorption heat pump according to Claim 13, **characterized in that** the adsorber chambers (1, 2) are situated in a motor vehicle in such a way that the metal sponge may be used to absorb kinetic energy in the event of accident.

15. The adsorption heat pump according to one of the preceding claims, **characterized in that** the adsorption heat pump is implemented as a bumper of the motor vehicle or is situated in a partial area of the bumper.

16. A method for air conditioning of a motor vehicle using an adsorption heat pump according to one of Claims 1 through 15, wherein the first adsorber chamber (1) adsorbs or desorbs alternately and simultaneously the second adsorber chamber (2) desorbs during adsorption of the first adsorber chamber (1) or adsorbs during desorption of the first adsorber chamber (1).

17. The method according to Claim 16, **characterized in that** after the drive engine (12) of the motor vehicle is turned off, at least one adsorber chamber (1, 2) is desorbed without simultaneous adsorption.

18. A use of an adsorption heat pump, in particular an adsorption heat pump according to one of Claims 1 through 15, as a cold accumulator and/or as a heat accumulator, wherein the sorbent is kept in a desorbed state.

19. A use of an adsorption heat pump, in particular an adsorption heat pump according to one of Claims 1 through 15, wherein the heat released during the adsorption is used for engine preheating.

## Revendications

1. Pompe à chaleur d'adsorption pour climatiser un véhicule, avec une première chambre d'adsorption (1), qui par l'intermédiaire d'un premier élément de liaison (6) est reliée avec un condensateur (3) et par l'intermédiaire d'un deuxième élément de liaison (7) est reliée avec un évaporateur (4), une deuxième chambre d'adsorption (2), qui par l'intermédiaire d'un troisième élément de liaison (8) est reliée avec le condensateur (3) et par l'intermédiaire d'un quatrième élément de liaison (9) est reliée avec l'évaporateur (4), **caractérisée en ce que** les chambres d'adsorption (1, 2), le condensateur (3) et l'évaporateur (4) sont entourés par une enveloppe sous vide (5) non suspendue, les chambres d'adsorption contenant des adsorbeurs, qui comprennent une matière support, qui est revêtue d'un sorbant.

2. Pompe à chaleur d'adsorption selon la revendication 1, avec une première chambre d'adsorption (1), qui par l'intermédiaire d'un premier élément de liaison (6) est reliée avec un condensateur (3) et par l'intermédiaire d'un deuxième élément de liaison (7) est reliée avec un évaporateur (4), une deuxième chambre d'adsorption (2), qui par l'intermédiaire d'un troisième élément de liaison (8) est reliée avec le condensateur (3) et par l'intermédiaire d'un quatrième élément de liaison (9) est reliée avec l'évaporateur (4), **caractérisée en ce que** les chambres d'adsorption (1, 2), le condensateur (3) et l'évaporateur (4) sont entourés d'une enveloppe sous vide (5) non suspendue, l'évaporateur (4) et le condensateur (3) étant disposés entre la première chambre d'adsorption (1) et la deuxième chambre d'adsorption (2), et étant reliés par un recyclage de produits condensés (10) avec un élément de liaison (11) réducteur de pression.

3. Pompe à chaleur d'adsorption selon l'une quelconque des revendications précédentes, **caractérisée en ce que** des soupapes thermo-hydrauliques sont insérées en tant qu'éléments de liaison (6, 7, 8, 9) entre les chambres d'adsorption (1, 2) et le condensateur (3) ainsi que l'évaporateur (4).

4. Pompe à chaleur d'adsorption selon l'une quelconque des revendications précédentes, **caractérisée en ce que**, entre les chambres d'adsorption (1, 2) il est prévu un échangeur thermique, dans lequel de la chaleur récupérable à partir du moteur d'entraînement (12) et/ou d'un chauffage auxiliaire peut être alimentée vers le sorbant à désorber.

5. Pompe à chaleur d'adsorption selon l'une quelconque des revendications précédentes, **caractérisée en ce que** l'échangeur thermique est adapté pour évacuer la chaleur qui se libère à l'adsorption.

6. Pompe à chaleur d'adsorption selon l'une quelconque des revendications précédentes, **caractérisée en ce que** le froid susceptible d'être produit dans l'évaporateur (4) peut être transmis par un agent caloporteur et/ou un tube échangeur de chaleur à un radiateur à air (14), dans lequel l'air à transporter dans une zone à refroidir peut être refroidi.

7. Pompe à chaleur d'adsorption selon l'une quelconque des revendications 1 à 5, **caractérisée en ce que** le froid susceptible d'être produit dans l'évaporateur (4) peut être transmis directement à l'air à transporter dans une zone à refroidir.

8. Pompe à chaleur d'adsorption selon l'une quelconque des revendications 1 à 7, **caractérisée en ce que** la chaleur produite dans les chambres d'adsorption (1, 2) et/ou dans le condensateur (3) peut être transmise par un agent caloporteur et/ou un tube échangeur de chaleur à un radiateur de retour (15), dans lequel la chaleur peut être restituée à l'air extérieur.

9. Pompe à chaleur d'adsorption selon l'une quelconque des revendications 1 à 7, **caractérisée en ce que** la chaleur produite dans les chambres d'adsorption (1, 2) et/ou dans le condensateur (3) peut être restituée directement à l'air extérieur.

10. Pompe à chaleur d'adsorption selon l'une quelconque des revendications précédentes, **caractérisée en ce que**, le sorbant est une zéolithe.

11. Pompe à chaleur d'adsorption selon l'une quelconque des revendications précédentes, **caractérisée en ce que** la substance active est de l'eau.

12. Pompe à chaleur d'adsorption selon l'une quelconque des revendications précédentes, **caractérisée en ce qu'**il existe une commande de la pompe à chaleur d'adsorption, qui permet une climatisation à une heure prédéfinie et/ou après la réception d'un signal déclenchable à l'extérieur du véhicule.

13. Pompe à chaleur d'adsorption selon l'une quelconque des revendications précédentes, **caractérisée en ce que** pour la transmission de chaleur du sorbant à un agent secondaire coulant dans un échangeur thermique, il est prévu une éponge métallique.

14. Pompe à chaleur d'adsorption selon la revendication 13, **caractérisée en ce que** les chambres d'adsorption (1, 2) sont disposées dans un véhicule automobile de sorte qu'en cas d'accident, l'éponge métallique puisse servir à absorber l'énergie cinétique.

15. Pompe à chaleur d'adsorption selon l'une quelconque des revendications précédentes, **caractérisée en ce que** la pompe à chaleur d'adsorption est conçue sous la forme d'un pare-chocs du véhicule automobile ou est disposée dans une zone partielle du pare-chocs.

16. Procédé de climatisation d'un véhicule automobile, avec une pompe à chaleur d'adsorption selon l'une quelconque des revendications 1 à 15, dans lequel, en alternance, la première chambre d'adsorption (1) est adsorbée ou désorbée et simultanément la deuxième chambre d'adsorption (2), est désorbée lors de l'adsorption de la première chambre d'adsorption (1), respectivement est adsorbée, lors de la désorption de la première chambre d'adsorption (1).

17. Procédé selon la revendication 16, **caractérisé en ce que**, après la mise à l'arrêt du moteur d'entraînement (12) du véhicule automobile, au moins une chambre d'adsorption (1, 2) est désorbée sans adsorption simultanée.

18. Utilisation d'une pompe à chaleur d'adsorption, notamment d'une pompe à chaleur d'adsorption selon l'une quelconque des revendications 1 à 15 en tant qu'accumulateur de froid et/ou en tant qu'accumulateur de chaleur, en ce que le sorbant est maintenu dans un état désorbé.

19. Utilisation d'une pompe à chaleur d'adsorption, notamment d'une pompe à chaleur d'adsorption selon l'une quelconque des revendications 1 à 15, en ce que la chaleur libérée lors de l'adsorption est utilisée pour préchauffer le moteur.
